# EUROPÄISCHE PATENTSCHRIFT

(11) **EP 0 566 951 B1**
(45) Veröffentlichungstag und Bekanntmachung des Hinweises auf die Patenterteilung: **15.05.1996**
(21) Anmeldenummer: 93105952.1
(22) Anmeldetag: 13.04.1993
(51) Int. Cl.: B29B 7/76

(54) **Mischkopf zum Vermischen von mindestens zwei Kunststoff bildenden, fliessfähigen Reaktionskomponenten**
Mixing head for mixing at least two flowable reactive components for making a plastic material
Tête de mélange pour mélanger au moins deux composants réactifs aptes à couler pour former une matière plastic

(30) Priorität: 24.04.1992 DE 4213525
(43) Veröffentlichungstag der Anmeldung: 27.10.1993
(73) Patentinhaber: MASCHINENFABRIK HENNECKE GmbH, D-51379 Leverkusen (DE)
(72) Erfinder: Proksa, Ferdinand, Dr., W-5090 Leverkusen 3 (DE); Sulzbach, Hans-Michael, Dipl.-Ing., W-5330 Königswinter 21 (DE); Althausen, Ferdinand, W-5206 Neunkirchen 1 (DE)
(74) Vertreter: Drope, Rüdiger, Dr.

(56) Entgegenhaltungen:
- EP-A- 0 121 342
- DE-A- 2 105 320
- FR-A- 2 501 080
- US-A- 3 390 814

## Beschreibung

Die Erfindung betrifft einen Mischkopf zum Vermischen von mindestens zwei Kunststoff bildenden: fließfähigen Reaktionskomponenten, bestehend aus einem Gehäuse mit Zuläufen, wobei in einer das Gehäuse durchziehenden Bohrung ein austauschbares Einsatzteil mit angeformtem Mischkammerboden angeordnet ist, welches eine Mischkammer und einen Auslaufkanal enthält sowie Einlaßöffnungen aufweist, wie aus DE-A-2 105 320 bekannt.

Die sogenannten Doppeltransportbandanlagen zur Herstellung von Sandwichelementen mit Hartschaumstoffkern oder gelegentlich auch kontinuierlich arbeitende Blockschäumanlagen sind mit über die Schäumbreite oszillierenden Mischköpfen, welche gleichzeitig ein Reaktionsgemisch auf eine wandernde Unterlage auftragen, ausgerüstet. Solche oszillierenden Mischköpfe müssen möglichst leicht sein, weil an den Umkehrpunkten erhebliche Verzögerungs- und Beschleunigungskräfte auftreten. Je größer die zu bewegende Masse ist, desto größer ist der Verschleiß an der Oszilliervorrichtung. Solche leichten Mischköpfe müssen gespült werden, was beispielsweise bei der Herstellung von Polyurethan-Schaumstoff in der Regel mit der Polyolkomponente geschieht. Dadurch wird jedoch die Umgebung belastet, Polyol verbraucht, welches zudem wegen seiner Verunreinigung auch noch entsorgt werden muß. Es wäre naheliegend, selbstreinigende Mischköpfe (US-A-3 263 928, DE-A1-2 920 388: DE-A1-3 017 950), d.h. solche mit Ausstoßkolben zu verwenden, wie sie für die Formverschäumung in die Praxis Eingang gefunden haben. Diese sind aber wesentlich schwerer und deshalb wegen des erhöhten Verschleißes der Oszilliervorrichtung nicht diskutabel.

Auswechselbare Einsatzteile sind insbesondere bei Mischköpfen mit Reinigungskolben bekannt.

Beispielsweise US-A-3 263 928 beschreibt einen solchen Mischkopf mit einem Einsatzteil, welches offensichtlich aus fertigungstechnischen Gründen und zur besseren Reinigung aus zwei Hälften besteht. Das Einsatzteil ist in einer Gehäusekappe angeordnet, welche mit einem Vorsatz verschraubt ist. Da die Zuleitungen durch die Gehäusekappe einmünden, ist eine schnelle Austauschbarkeit nicht gewährleistet.

Aus DE-A1-3 017 950 ist bekannt, bei einem Ausstoßkolbenmischkopf ein auswechselbares Auslaufrohr mittels einer Schraubkappe an das Mischkammergehäuse anzuschließen.

Schließlich zeigt DE-A1-2 920 388 einen Ausstoßkolben mit einem die Mischkammer und den Auslaufkanal enthaltenden Einsatzteil. Dieses ist nur durch Zerlegen des Mischkopfes austauschbar und dient der Abdeckung von in das Gehäuse eingearbeiteten Rezirkulationsnuten.

Gemäß DE-A-2 105 320 ist auch bereits ein Mischkopf ohne Ausstoßkolben bekannt, bei dem sowohl Mischkammer als auch Auslaufkanal in einem Einsatzteil mit angeformtem Mischkammerboden angeordnet sind, das mittels Hydraulik in kürzester Zeit durch Einschieben bzw. Ausstoßen austauschbar ist.

Die Aufgabe der vorliegenden Erfindung besteht darin, einen Mischkopf der genannten Art mit einem sowohl Auslaufkanal als auch Mischkammer enthaltenden Einsatzteil mit angeformtem Mischkammerboden zur Verfügung zu stellen, das durch einfaches Einschieben und Herausziehen von Hand in kürzester Zeit austauschbar ist.

Die Aufgabe wird dadurch gelöst, daß das Einsatzteil jenseits des Mischkammerbodens mindestens einen elastischen, mit dem Gehäuse zusammenwirkenden Clip aufweist.

Dieses vorzugsweise aus einem Kunststoff bestehende Einsatzteil läßt sich beispielsweise durch Spritzgießen sehr einfach herstellen. Selbstverständlich läßt es sich auch aus Metall, insbesondere Aluminium, fertigen, wodurch es jedoch etwas schwerer ist. Ein Einsatzteil aus Kunststoff hat gegenüber den bisher für diesen Zweck benutzten Mischköpfen noch den Vorteil weiterer Gewichtsersparnis, weil eben anstelle des Metalls bei gleichen Abmessungen der leichtere Kunststoff tritt. Ein solches billiges Einsatzteil läßt sich als Wegwerfartikel verwenden oder ist bei Herstellung aus einem Kunststoff, wie Polyethylen oder Polytetrafluorethylen, an welchem das aushärtende Reaktionsgemisch schlecht haftet, wiederverwendbar. Es versteht sich, daß man die mit dem Reaktionsgemisch in Berührung kommenden Flächen des Einsatzteils auch mit einem Antihaftmittel beschichten kann.

Das Einsatzteil besitzt rohrförmige Gestalt, weist Einlaßöffnungen für die Reaktionskomponenten auf und besitzt Zentriermittel, die derart abgestimmt sind, daß die Einlaßöffnungen mit den Zuläufen im Gehäuse übereinstimmen. Solche Zentriermittel bestehen beispielsweise aus einer Längsnut in der Gehäusebohrung mit zugehöriger Feder am Einsatzteil Dadurch ist das Einsatzteil gegen Verdrehen gesichert: so daß die Einsatzöffnungen und die Zuläufe sich decken. Die Längspositionierung läßt sich durch eine definierte Länge von Nut und Feder erreichen oder durch einen äußeren Ringansatz am Einsatzteil, welcher gegen das Gehäuse anliegt. Um das Einsatzteil im Gehäuse fest, aber austauschbar zu halten, bieten sich verschiedene Möglichkeiten an.

Die Clipverbindung kann beispielsweise in einer leichten Zunahme der Tiefe der Nut und der Zunahme der Höhe der Feder entstehen, so daß beim Einschieben des Einsatzteils in das Gehäuse eine gewisse Schnappwirkung auftritt. Oder jenseits des Bodens des Einsatzteils ist ein Kranz von sich schräg nach außen erstreckenden Nasen vorgesehen, zwischen denen Schlitze angeordnet sind.

Diese Nasen greifen an der Rückseite des Gehäuses an. Auch ist es möglich, in der Wandung der Gehäusebohrung oder rückseitig am Gehäuse zumindest einen Noppen vorzusehen, welcher in eine Vertiefung des Einsatzteils einrastet. Dazu muß aber dieses Teil im besagten Bereich ausreichend elastisch sein, damit es sich beim Einschieben bzw. beim Herausnehmen aus der Gehäusebohrung in der notwendigen Weise verformt. Diese Art von Clipsicherung dient auch gleichzeitig der Positionierung, wenn die Lage von Vertiefung und Noppen auf die Lage der Zuläufe abgestimmt sind.

Gemäß einer weiteren besonderen Ausführungsform besteht das Einsatzteil aus zwei gegeneinander verspannten Halbschalen.

Diese Ausführungsform ist fertigungstechnisch besonders einfach, weil ein Spritzgießformwerkzeug ohne Schieber verwendbar ist, und es ist möglich, gleichzeitig ein Filmscharnier anzuspritzen, damit die beiden Halbschalen verbunden sind. Als wiederverwendbares Einsatzteil ist diese Ausführungsform besonders empfehlenswert, weil man beim Auseinanderklappen der Halbschalen den darin ausgehärteten Gemischrest sehr einfach entformen kann. Die zueinander weisenden Längskanten der Halbschalen sind in vorteilhafter Weise mit Nut- und Federprofilierung versehen, um eine größere Formstabilität und Abdichtung zu erzielen. Die Halbschalen sind einerseits in der Gehäusebohrung gegeneinander verspannt und das Auslaßende muß durch einen übergeschobenen Ring oder ein übergeschobenes Rohrstück oder einen Schnellverschluß zusammengehalten werden.

Gemäß einer weiteren besonderen Ausführungsform ist der Auslaufabschnitt als Gießharke ausgebildet.

Eine solche Gießharke ist an sich bekannt, aber in der speziellen Ausführungsform besitzt sie den Vorteil, daß sie nicht gespült werden muß. Dies trifft insbesondere für die Ausführungsform aus zwei Halbschalen zu.

Vorzugsweise ist der Auslaufabschnitt mit einem Temperiermantel umgeben.

Dieser läßt sich beim Spritzgießen anformen, was recht aufwendig ist. Sinnvoller ist es, diesen Temperiermantel mit dem Gehäuse fest, aber gegebenenfalls lösbar zu verbinden. Bei der Halbschalen-Ausführungsform des Einsatzteils läßt er sich gleichzeitig als Verspannelement verwenden. Soweit der Auslaufabschnitt als Gießharke ausgebildet ist, muß der Temperiermantel die Auslaßöffnungen der Gießharke freilassen.

In der Zeichnung ist der neue Mischkopf in zwei Ausführungsbeispielen rein schematisch dargestellt und nachstehend näher erläutert. Es zeigen:
- Fig. 1: eine erste Ausführungsform,
- Fig. 2: eine zweite Ausführungsform und
- Fig. 3: einen Schnitt gemäß Linie A-A in Fig. 2.

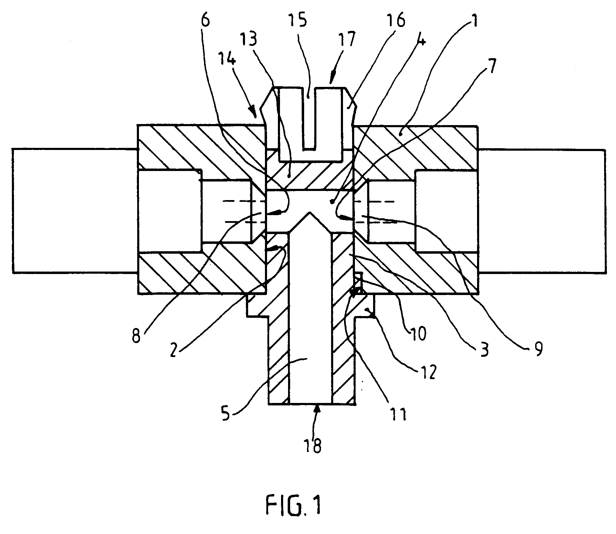

In Fig. 1 besteht der Mischkopf aus einem Gehäuse 1 mit einer Gehäusebohrung 2, in welcher ein Einsatzteil 3 angeordnet ist. Dieses Einsatzteil 3 besteht aus einem Polyethylen-Spritzgießteil und enthält eine Mischkammer 4 sowie einen Auslaufkanal 5. Die Mischkammer 4 weist Einlaßöffnungen 6, 7 auf, in welche aus Einspritzdüsen für die Reaktionskomponenten bestehende Zuläufe 8, 9 weisen. Es ist durch eine Feder 10, welche in eine in der Gehäusebohrung 2 angeordnete Nut 11 eingreift, gegen Verdrehen gesichert. Feder 10 und Nut 11 sind auf die Position der Einlaßöffnungen 6, 7 bzw. der Zuläufe 8, 9 abgestimmt. Zusätzlich weist das Einsatzteil 3 außen einen Anschlagring 12 auf. Rückseitig ist das Einsatzteil 3 mit einem Boden 13 verschlossen, welcher gleichzeitig den Boden der Mischkammer 4 bildet. Jenseits des Bodens ist das Einsatzteil 3 mit einer als Clip 14 ausgebildeten, Schlitze 15 aufweisenden und hinter das Gehäuse 1 greifenden Nasen 16 versehen. Die Position der Nasen 16 ist auf die Position des Anschlagringes 12 abgestimmt, um einen festen Sitz zu gewährleisten. Diese Verlängerung 17 ist durch die Schlitze 15 derart elastisch, daß sich die Nasen 16 beim Einschieben und Herausziehen des Einsatzteils 3 in bzw. aus der Gehäusebohrung 2 in der erforderlichen Weise reversibel verformen können. Der Auslaufkanal 5 ist mit einer Auslauföffnung 18 versehen.

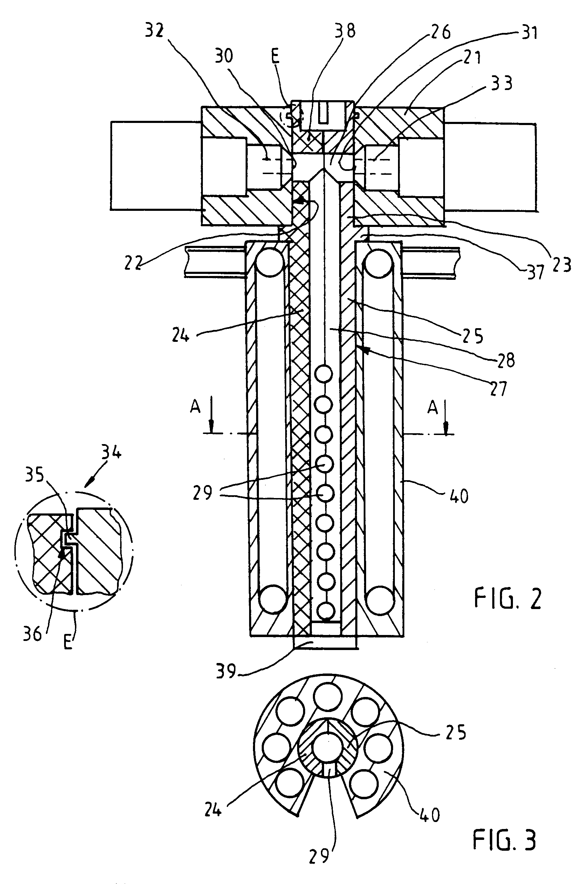

In den Fig. 2, 3 besteht der Mischkopf aus einem Gehäuse 21 mit einer Gehäusebohrung 22, in welcher ein Einsatzteil 23 angeordnet ist. Dieses Einsatzteil 23 besteht aus zwei Halbschalen 24, 25 aus Polytetrafluorethylen und enthält eine Mischkammer 26 sowie einen in einem Auslaufabschnitt 27 angeordneten Auslaufkanal 28. Dieser Auslaufabschnitt 27 ist als an ihrem Ende verschlossene und in Längsrichtung mit Austrittsöffnungen 29 versehene Gießharke ausgebildet. Die Mischkammer 26 weist Einlaßöffnungen 30, 31 auf, in welche aus Einspritzdüsen für die Reaktionskomponenten bestehende Zuläufe 32, 33 weisen. Diese Halbschalen 24, 25 sind durch Noppen 35 und Vertiefungen 36, die als Clip 34 zusammenwirken, gesichert. Sie sichern das Einsatzteil 23 sowohl gegen Verdrehen als auch gegen Längsverschieben. Ihre Lage ist auf die Lage der Einlaßöffnungen 30, 31 bzw. der Zuläufe 32, 33 abgestimmt. Zusätzlich ist ein Ringansatz 37 vorgesehen. Beide Enden des Einsatzteils 23 sind durch Böden 38, 39 verschlossen. Der Auslaufabschnitt 27 ist von einem Temperiermantel 40 umgeben, welcher die Auslaßöffnungen 29 freiläßt, aber dennoch die beiden Halbschalen 24, 25 miteinander verspannt.

## Patentansprüche

1. Mischkopf zum Vermischen von mindestens zwei Kunststoff bildenden, fließfähigen Reaktionskomponenten, bestehend aus einem Gehäuse (1; 21) mit Zuläufen (8, 9; 32, 33), wobei in einer das Gehäuse (1; 21) durchziehenden Bohrung (2; 22) ein austauschbares Einsatzteil (3; 23) mit angeformtem Mischkammerboden (13; 38) angeordnet ist, welches eine Mischkammer (4; 24) und einen Auslaufkanal (5; 28) enthält sowie Einlaßöffnungen 6, 7; 30, 31) aufweist, dadurch gekennzeichnet, daß das Einsatzteil (3; 23) jenseits des Mischkammerbodens (13; 38) mindestens einen elastischen, mit dem Gehäuse (1; 21) zusammenwirkenden Clip (14; 34) aufweist.

2. Mischkopf nach Anspruch 1, dadurch gekennzeichnet, daß das Einsatzteil (3; 23) aus zwei gegeneinander verspannten Halbschalen (24, 25) besteht.

3. Mischkopf nach Anspruch 1 oder 2, dadurch gekennzeichnet, daß der Auslaufabschnitt (27) als Gießharke ausgebildet ist.

4. Mischkopf nach einem der Ansprüche 1, 2 oder 3, dadurch gekennzeichnet, daß der Auslaufabschnitt (27) von einem Temperiermantel (40) umgeben ist.

## Claims

1. Mixing head for mixing at least two plastics-forming, free-flowing reaction components, consisting of a housing (1;21) with feeds (8,9;32,33), there being disposed within a bore (2;22) passing through the housing (1;21) a replaceable insert part (3;23), with a mixing chamber base (13;38) formed thereon, which includes a mixing chamber (4;24) and an outlet channel (5;28) and has inlet apertures (6,7;30,31), characterized in that on the farther side of the mixing chamber base (13;38) the insert part (3;23) has at least one elastic clip (14;34), which acts together with the housing (1;21).

2. Mixing head according to Claim 1, characterized in that the insert part (3;23) consists of two half-shells (24;25) braced against one another.

3. Mixing head according to Claim 1 or 2, characterized in that the outlet section (27) is formed as a pouring rake.

4. Mixing head according to one of Claims 1, 2 or 3, characterized in that the outlet section (27) is surrounded by a tempering jacket (40).

## Revendications

1. Tête de mélange pour mélanger au moins deux composants réactifs, aptes à couler, pour former une matière plastique, constituée d'un carter (1; 21) avec des arrivées (8, 9; 32, 33), dans le cas de laquelle, dans un perçage (2; 22) traversant le carter (1; 21), est disposée une pièce insérée échangeable (3; 23) avec un fond de chambre de mélange (13; 38) qui y est formé, garniture qui contient une chambre de mélange (4; 24) et un canal de sortie (5; 28) et présente des ouvertures d'entrée (6, 7; 30 , 31), caractérisée par le fait qu'au-delà du fond (13; 38) de la chambre de mélange, la garniture insérée (3; 23) présente au moins une pince élastique (14; 34) collaborant avec le carter (1; 21).

2. Tête de mélange selon la revendication 1, caractérisée par le fait que la garniture insérée (3; 23) est constituée de deux demicoques (24, 25) bridées l'une contre l'autre.

3. Tête de mélange selon la revendication 1 ou 2, caractérisée par le fait que la portion de sortie (27) est conçue sous forme d'un râteau coulé.

4. Tête de mélange selon l'une des revendications 1, 2 ou 3, caractérisée par le fait que la portion de sortie (27) est entourée d'une enveloppe de mise en température (40).
